# EUROPEAN PATENT APPLICATION

(11) **EP 2 365 572 A2**
(43) Date of publication of application: **14.09.2011**
(21) Application number: 11001795.1
(22) Date of filing: 03.03.2011
(51) Int. Cl.: H01M 10/052, H01M 10/04

(54) **Lithium secondary battery**

(30) Priority: 04.03.2010 JP 2010048148; 26.05.2010 JP 2010120724
(71) Applicant: Sanyo Electric Co., Ltd., Osaka 570-8677 (JP)
(72) Inventor: Fukui, Atsushi, Moriguchi City Osaka 570-8677 (JP); Sunano, Taizou, Moriguchi City Osaka 570-8677 (JP); Kamino, Maruo, Moriguchi City Osaka 570-8677 (JP)
(74) Representative: TER MEER - STEINMEISTER & PARTNER GbR

(57) **Abstract**

An object of the present invention is to further improve charge-discharge cycle performance in a lithium secondary battery using a negative electrode active material that is alloyed with lithium.

A lithium secondary battery 1 comprises an electrode assembly 10 and a non-aqueous electrolyte. The electrode assembly 10 is made by winding a negative electrode 11, a positive electrode 12, and a separator 13 interposed between the negative and positive electrodes 11, 12. The negative electrode 11 contains a negative electrode active material that is alloyed with lithium. The non-aqueous electrolyte is impregnated in the electrode assembly 10. At least one of the negative and positive electrodes 11, 12 is divided into a plurality of electrode units 11A, 11B which are arranged at spaces for each other along the winding direction.

## Description

### BACKGROUND OF THE INVENTION

### 1. Field of the Invention

The present invention relates to lithium secondary batteries, and more particularly, relates to lithium secondary batteries using a negative electrode active material that is alloyed with lithium.

### 2. Description of the Related Art

In recent years, negative electrode active materials which can provide higher energy density for lithium secondary batteries have been actively researched and developed. As such a negative electrode active material, there have been proposed materials, such as silicon, germanium, tin, and aluminum, which occlude lithium through an alloying reaction with lithium. Among these materials, silicon and a material containing silicon, such as silicon alloy, have an especially large theoretical capacity, and thus have a high degree of expectation for the negative electrode active material.

However, the negative electrode active material that is alloyed with lithium shows a large volume change in the occlusion/release of lithium. For this reason, in a negative electrode using the negative electrode active material that is alloyed with lithium, the negative electrode active material is easily pulverized and a negative electrode active material layer is easily peeled off from an electrode current collector due to the repeated charge-discharge operations. Therefore, the lithium secondary battery using the negative electrode active material that is alloyed with lithium has a problem of poor charge-discharge cycle performance.

In view of the problem, there have been proposed different techniques for improving the charge-discharge cycle performance of the lithium secondary battery using the negative electrode active material containing silicon (see, e.g., Japanese Published Unexamined Patent Applications Nos. 2002-260637 & 2008-124036).

Specifically, in Japanese Published Unexamined Patent Application No. 2002-260637 for example, it is proposed to prepare a negative electrode by sintering the mixture of active material particles containing silicon and a conductive metal powder containing copper on an electrode current collector made of a copper foil having a surface roughness Ra of 0.2 µm or greater, under a non-oxidizing atmosphere.

For example, in Japanese Published Unexamined Patent Application No. 2008-124036, it is proposed to use a negative electrode current collector having a proportional limit of 2.0 N/mm or greater in a negative electrode using a negative electrode active material that is alloyed with lithium.

### BRIEF SUMMARY OF THE INVENTION

By using the techniques disclosed in Japanese Published Unexamined Patent Applications Nos. 2002-260637 & 2008-124036, the charge-discharge cycle performance can be improved. However, in recent years, demands for higher performance of the lithium secondary batteries have been increasingly high, and thus there is demand for much higher charge-discharge cycle performance.

In light of this, the present invention was made, and it is therefore an object of the invention to further improve charge-discharge cycle performance in lithium secondary batteries using a negative electrode active material that is alloyed with lithium.

A lithium secondary battery according to the present invention comprises an electrode assembly and a non-aqueous electrolyte. The electrode assembly is made by winding a negative electrode, a positive electrode, and a separator interposed between the negative and positive electrodes. The negative electrode contains a negative electrode active material that is alloyed with lithium. The non-aqueous electrolyte is impregnated in the electrode assembly.

In the present invention, at least one of the negative and positive electrodes is divided into a plurality of electrode units which are arranged at spaces for one another along the winding direction.

Therefore, in the present invention, at least one of the negative and positive electrodes is divided into the plurality of electrode units, and a space is formed between the adjacent electrode units. Hence, the electrode assembly shows large deformation. Even when the negative electrode active material expands by occluding lithium, the pressure in the battery is effectively eased.

For example, it is considered that the negative electrode is divided into the plurality of electrode units. The electrode units can expand in the winding direction even when the negative electrode expands. Thus, great pressure is effectively prevented from being applied to the negative electrode, the positive electrode, and the separator interposed between the negative and positive electrodes.

For example, it is considered that the positive electrode is divided into a plurality of electrode units and the negative electrode is integrally formed. Since the positive electrode is divided into the plurality of electrode units, the negative electrode may expand without blocking by the positive electrode. Moreover, as compared with the case where the positive electrode is integrally formed so that the positive electrode is unlikely to displace in a radial direction, the pressure applied to the separator which is placed between the positive and negative electrodes becomes lower. As a consequence, the separator is less likely to cause the clogging due to the crushing. Hence, the lithium secondary battery having good charge-discharge cycle performance can be achieved.

It is considered that each of the positive and negative electrodes is divided into a plurality of electrode units. When the negative electrode active material occludes lithium, the electrode units forming the negative electrode can expand in the winding direction, and also the expansion of the negative electrode is less likely to be regulated by the positive electrode. Therefore, the pressure applied to the separator can be further reduced. As a consequence, the separator is less likely to cause the clogging due to the crushing. Hence, the lithium secondary battery having good charge-discharge cycle performance can be achieved. For this reason, in the present invention, it is particularly preferable to divide each of the positive and negative electrodes into the plurality of electrode units.

In the case where one of the positive and negative electrodes is divided into the plurality of electrode units, it is more preferable that the negative electrode to be expanded is divided into the plurality of electrode units, than that the positive electrode not to be expanded is divided into the plurality of electrode units. This is because the pressure applied to the separator and other components can be effectively reduced.

In addition, for the negative electrode that expands due to the occlusion of lithium by the negative electrode active material, a current collector having higher tensile modulus than the positive electrode is often used. From this point of view, it is still preferable that the negative electrode is divided into the plurality of electrode units.

It is noted that the tensile modulus in the present invention is obtained by dividing, by width (mm) of a test material used in a tensile test, gradient (N) of tensile force (N) in a small strain (%) region of a tensile force-strain curve which is obtained by the tensile test.

To more effectively reduce the pressure applied to the separator and other components, it is preferable to divide at least one of the negative and positive electrodes into more electrode units. However, when at least one of the negative and positive electrodes is divided into more electrode units, the volume of the portion which is not involved in charging and discharging increases and thus the volume percent of the active material is reduced, in the lithium secondary battery. For this reason, the capacity of the lithium secondary battery is likely to degrade. Hence, in the electrode which is divided into the plurality of electrode units, of the negative and positive electrodes, the number of the electrode units is preferably four or less, more preferably three or less.

In the present invention, the shape of a battery case into which the electrode assembly is put is not particularly limited. However, when the battery case is cylindrical, the present invention is particularly effective. This is because the cylindrical battery case is less deformable and pressure within the battery case easily increases. Moreover, when the battery case is cylindrical, the electrode assembly is also wound into a cylindrical shape. Thus, when the negative electrode expands, the negative and positive electrodes easily move in the winding direction so that great pressure is less likely to be applied to the separator and other components.

In the present invention, the adjacent electrode units need not be connected to each other, but are preferably connected to each other via a connecting member. This is because since the plurality of electrode units are combined via the connecting members, it is easy to wind the electrode assembly. In addition, during the winding process of the electrode assembly, the connecting members allow the dimension of the space between the adjacent electrode units to keep constant, and thus it is ensured to form the space between the adjacent electrode units.

The tensile modulus of the connecting member is preferably lower than that of the electrode unit. In this case, the connecting member easily deforms in the winding direction of the electrode units. Therefore, the tensile modulus of the connecting member is preferably lower. Specifically, the tensile modulus of the connecting member is preferably 90 N/mm or less. It is noted however that if the tensile modulus of the connecting member is too low, it becomes difficult to keep the space between the adjacent electrode units as appropriate in the winding process of the electrode assembly. Hence, the tensile modulus of the connecting member is preferably 10 N/mm or greater. The preferred tensile modulus can be achieved by the connecting member made of resin for example. Hence, the connecting member is preferably made of resin.

Specifically, the connecting member may have a first tape which is adhered or bonded to one side of the electrode unit, and a second tape which is adhered or bonded to the other side of the electrode unit.

The lithium secondary battery according to the present invention may further comprise tabs which are electrically connected to each end of the plurality of electrode units. In this case, the plurality of electrode units are preferably arranged such that the ends of the electrode units to which the tabs are connected are not adjacent to each other in the winding direction. For example, when the plurality of electrode units are arranged such that the ends of the electrode units to which the tabs are connected are adjacent to each other in the winding direction, the electrode units is less deformable by the tabs. In contrast, when the plurality of electrode units are arranged such that the ends of the electrode units to which the tabs are connected are not adjacent to each other in the winding direction, the deformation of the electrode units is difficult to be blocked by the tabs. Therefore, the pressure applied to the separator and other components can be more effectively reduced. As a consequence, higher charge-discharge cycle performance can be achieved.

In the present invention, the negative electrode active material may be any material that is alloyed with lithium, and is not especially limited. The negative electrode active material may be one or more metals which are selected from the group consisting of such as silicon, germanium, tin, and aluminum, or an alloy containing one or more metals which are selected from the group consisting of such as silicon, germanium, tin, and aluminum. Among these, the negative electrode active material is preferably at least one of silicon and silicon alloy, which may further increase the capacity of lithium secondary battery.

In the present invention, the positive electrode preferably contains a lithium-transition metal composite oxide represented by the chemical formula, LiₐNi_{(1-b-c)}Co_{b}Al_{c}O_{2,} where 0<a≤1.1, 0.1≤b≤0.3, and 0.03≤c≤0.1, as a positive electrode active material. In this case, the effect of the present invention can be more significantly achieved.

According to the present invention, in lithium secondary batteries using a negative electrode active material that is alloyed with lithium, charge-discharge cycle performance can be further improved.

### BRIEF DESCRIPTION OF THE DRAWINGS

Fig. 1 is a schematic cross-sectional view of a lithium secondary battery according to a first embodiment of the present invention;
Fig. 2 is a schematic perspective view of an electrode assembly according to the first embodiment;
Fig. 3 is a schematic plan view of the developed negative electrode in the first embodiment, where the specific dimension therein is the dimension described in Example 1;
Fig. 4 is a schematic cross-sectional view taken along line IV-IV in Fig. 3;
Fig. 5 is a schematic plan view of the developed positive electrode in the first embodiment, where the specific dimension therein is the dimension described in Example 1, and the dimension outside of parentheses indicates the dimension of the front face and the dimension within parentheses indicates the dimension of the back face;
Fig. 6 is a schematic cross-sectional view taken along line VI-VI in Fig. 5;
Fig. 7 is a schematic plan view of the developed positive electrode in a second embodiment;
Fig. 8 is a schematic plan view of the developed negative electrode in the second embodiment;
Fig. 9 is a schematic plan view of the developed positive electrode in a third embodiment, where the specific dimension therein is the dimension described in Example 5;
Fig. 10 is a schematic cross-sectional view taken along line X-X in Fig. 9;
Fig. 11 is a schematic plan view of the developed positive electrode in a fourth embodiment, where the specific dimension therein is the dimension described in Example 9;
Fig. 12 is a schematic plan view of the lithium secondary battery according to a fifth embodiment;
Fig. 13 is a schematic cross-sectional view of the lithium secondary battery according to the fifth embodiment;
Fig. 14 is a schematic perspective view of the electrode assembly in the fifth embodiment; and
Fig. 15 is a diagrammatic plan view of a sample to measure adhesive strength of an adhesive tape.

### DESCRIPTION OF THE PREFERRED EMBODIMENTS

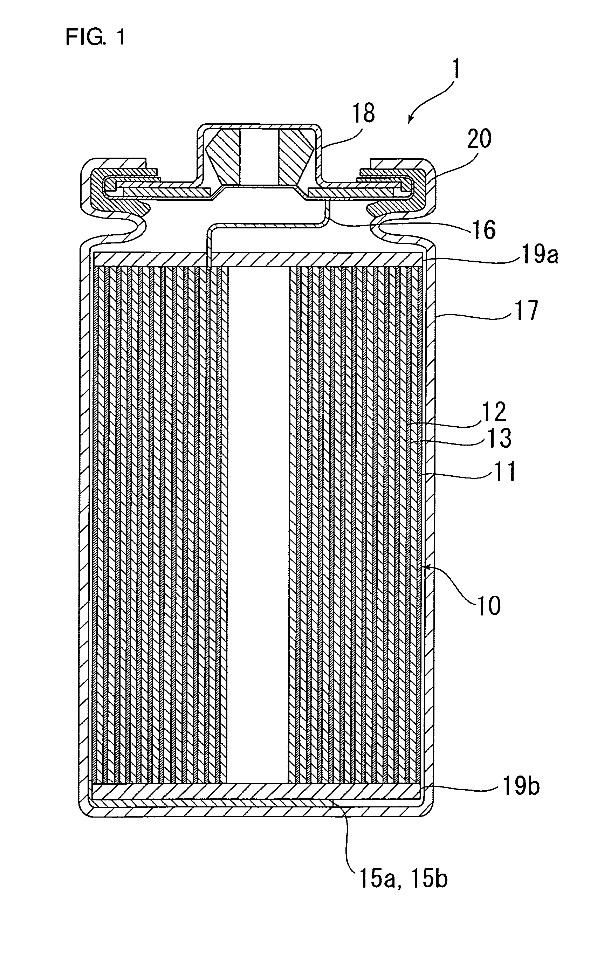

The preferred embodiments of the present invention will be described below with reference to a lithium secondary battery 1 and other components shown in Fig. 1. It is noted that the lithium secondary battery 1 and other components are illustrative only, and are not intended to limit the present invention.

### <First Embodiment>

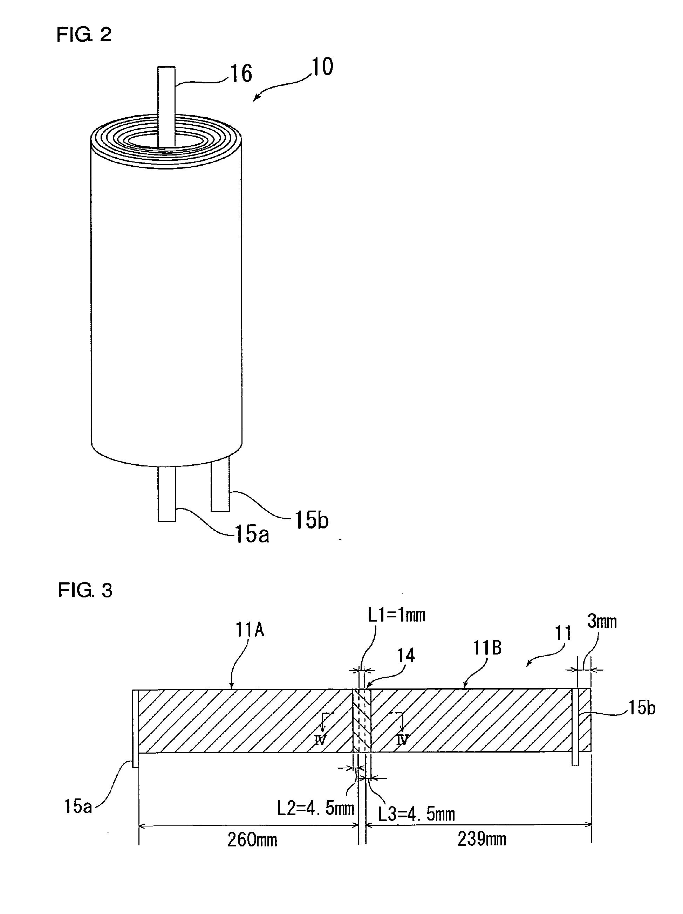

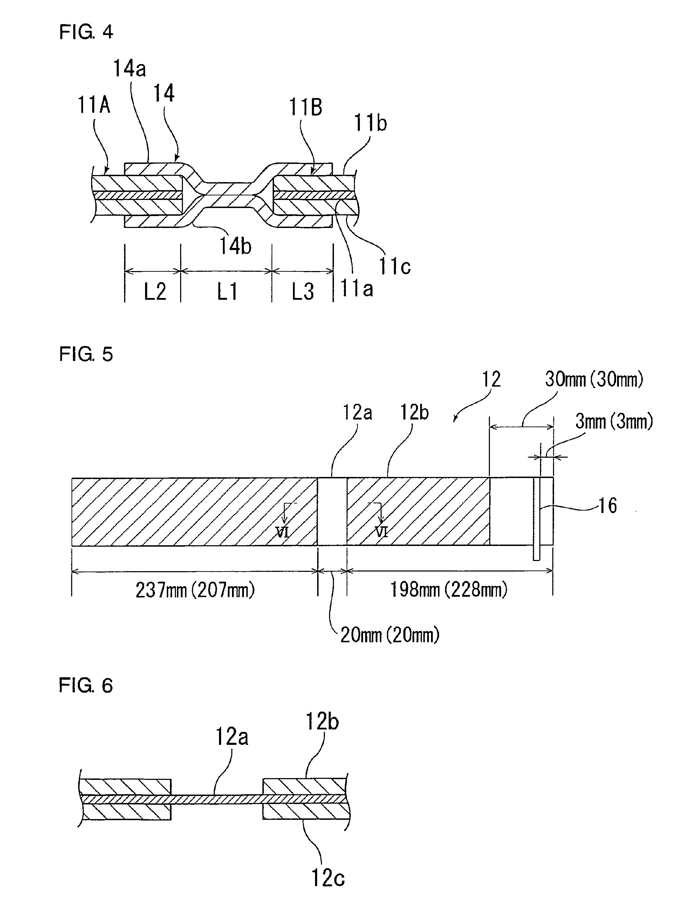

Fig. 1 is a schematic cross-sectional view of a lithium secondary battery according to a first embodiment. Fig. 2 is a schematic perspective view of an electrode assembly according to the first embodiment. Fig. 3 is a schematic plan view of a developed negative electrode in the first embodiment. Fig. 4 is a schematic cross-sectional view taken along line IV-IV in Fig. 3. Fig. 5 is a schematic plan view of a developed positive electrode in the first embodiment. Fig. 6 is a schematic cross-sectional view taken along line VI-VI in Fig. 5. It is noted that in Figs. 3 and 5, and Figs. 7-9 and 11 set forth below, for illustration purpose, a region where an active material layer is formed and a region where a connecting member is arranged are shown by hatching.

As shown in Fig. 1, the lithium secondary battery 1 comprises an electrode assembly 10. The electrode assembly 10 is formed by winding a negative electrode 11 shown in Fig. 3, a positive electrode 12 shown in Fig. 5, and a separator 13 (see Fig. 1) interposed between the negative and positive electrodes 11, 12. The outer end portion of the electrode assembly 10 is fixed by an adhesive tape not shown. It is preferable that the adhesive tape has such a size and adhesive strength that the adhesive tape is not peeled off even when the volume of the negative electrode active material changes during charging and discharging. However, if the adhesive tape is too large, the proportion of the adhesive tape, which is not involved in charging and discharging, increases in the lithium secondary battery 1, and thus the capacity of the lithium secondary battery 1 may degrade.

### (Negative electrode 11)

As shown in Fig. 4, the negative electrode 11 has a negative electrode current collector 11a, and negative electrode active material layers 11b, 11c which are formed on at least one surface of the negative electrode current collector 11a. In the present embodiment, the negative electrode active material layers 11b, 11c are formed on the both surfaces of the negative electrode current collector 11a.

The negative electrode current collector 11a may be made of a foil formed of, for example, a metal such as Cu or an alloy containing a metal such as Cu.

The negative electrode active material layers 11b, 11c contain the negative electrode active material that is alloyed with lithium. The negative electrode active material that is alloyed with lithium may be one or more metals which are selected from the group consisting of such as silicon, germanium, tin, and aluminum, or an alloy containing one or more metals which are selected from the group consisting of such as silicon, germanium, tin, and aluminum. Particularly, the negative electrode active material is preferably at least one of silicon and silicon alloy. This is because such negative electrode active material may allow the capacity of the lithium secondary battery 1 to increase.

The negative electrode active material layers 11b, 11c may contain a binder, a conductive agent, or the like, in addition to the negative electrode active material, as appropriate.

In the present embodiment, the negative electrode 11 is divided into a plurality of electrode units 11A, 11B. Each of the plurality of electrode units 11A, 11B has the aforementioned negative electrode current collector 11a, and the negative electrode active material layers 11b, 11c which are formed on at least one surface of the negative electrode current collector 11a. Therefore, each of the electrode units 11 A, 11 B may function alone as a negative electrode. The plurality of electrode units 11 A, 11B are arranged at spaces each other along the winding direction of the electrode assembly 10.

Negative electrode current collector tabs 15a, 15b are electrically connected to the plurality of electrode units 11A, 11B, respectively. Specifically, the negative electrode current collector tabs 15a, 15b are connected to the end portion of the electrode units 11A, 11B, respectively. In more detail, the negative electrode current collector tab 15a is electrically connected to the electrode unit 11A at its end potion that is opposite to the electrode unit 11B. On the other hand, the negative electrode current collector tab 15b is electrically connected to the electrode unit 11B at its end portion that is opposite to the electrode unit 11A. Therefore, the plurality of electrode units 11 A, 11B are placed such that the end potion of the electrode unit 11 A which is connected to the negative electrode current collector tab 15a and the end portion of the electrode unit 11B which is connected to the negative electrode current collector tab 15b are not adjacent to each other in the winding direction.

It is preferable that the negative electrode current collector tabs 15a, 15b stably exist so as not to present the lithium occlusion/release reaction during charging and discharging of the lithium secondary battery 1 and not to present the dissolution reaction into the non-aqueous electrolyte. The negative electrode current collector tabs 15a, 15b can be formed of nickel, copper, or the like. Particularly, the material of the negative electrode current collector tabs 15a, 15b is preferably nickel.

The shape of the negative electrode current collector tabs 15a, 15b is not particularly limited, but the negative electrode current collector tabs 15a, 15b preferably have a plate shape. In this case, the negative electrode current collector tabs 15a, 15b preferably have a thickness of about 30 µm to 150µm. The negative electrode current collector tabs 15a, 15b preferably have a width of about 3 mm to 10 mm. If the negative electrode current collector tabs 15a, 15b have too small thickness or width, the electric resistance of the junction between the negative electrode current collector tabs 15a, 15b and the negative electrode 11 increases, and thus the function of the negative electrode current collector tabs 15a, 15b may degrade. In contrast, the negative electrode current collector tabs 15a, 15b have too large thickness or width, the proportion of the negative electrode current collector tabs 15a, 15b, which is not involved in charging and discharging, significantly increases in the lithium secondary battery 1, and thus the capacity of the lithium secondary battery 1 may degrade.

Examples of a preferred method for attaching the negative electrode current collector tabs 15a, 15b to the negative electrode 11 include an ultrasonic welding method, a calking method, and the like.

The electrode unit 11A and the electrode unit 11B, which are adjacent with each other in the winding direction, are connected via the connecting member 14. In the present embodiment, the connecting member 14 is made of resin. The connecting member 14 has first and second resin tapes 14a, 14b. Adhesive or bond is applied to one surface of each of the first and second resin tapes 14a, 14b. The first resin tape 14a is adhered or bonded to one surface of the electrode units 11 A, 11B, and the second resin tape 14b is adhered or bonded to the other surface of the electrode units 11A, 11B. The center portion of the first resin tape 14a in the winding direction and the center portion of the second resin tape 14b in the winding direction are adhered or bonded to each other.

It is noted that distance L1 between the electrode units 11A, 11B in the winding direction is preferably about 1 mm to 3 mm, for example. Moreover, the ratio of the distance L 1 between the electrode units 11A, 11B in the winding direction, to the length of the negative electrode active material layers 11b, 11c of the electrode units 11 A, 11B in the winding direction, is preferably about 0.001 to 0.03.

If the distance between the electrode units 11A, 11B which are adjacent to each other in the winding direction is too short, the effect that the expansion of the negative electrode 11 is difficult to be blocked cannot be sometimes obtained. In contrast, if the distance between the electrode units 11A, 11 B is too long, the proportion of the portion which is not involved in charging and discharging significantly increases in the lithium secondary battery 1, and thus the capacity of the lithium secondary battery 1 may degrade.

The end portions of the first and second resin tapes 14a, 14b which are adhered or bonded to the electrode units 11A, 11B preferably have length L2, L3 of 1 mm to 10 mm, for example. If the length L2, L3 is too short, it may not be ensured that the first and second resin tapes 14a, 14b are adhered or bonded to the electrode units 11A, 11B. In contrast, if the length L2, L3 is too long, the volume of the portion of the negative electrode active material layers 11b, 11c, which is less involved in charging and discharging because of being covered by the first and second resin tapes 14a, 14b, increases. For this reason, the capacity of the lithium secondary battery 1 may degrade.

Each of the first and second resin tapes 14a, 14b may have a thickness of about 10 µm to 100 µm, for example. If the thickness of the first and second resin tapes 14a, 14b is too small, the strength of the first and second resin tapes 14a, 14b may be too low. If the thickness of the first and second resin tapes 14a, 14b is too large, the proportion of the first and second resin tapes 14a, 14b, which are not involved in charging and discharging significantly increases in the lithium secondary battery 1, and thus the capacity of the lithium secondary battery 1 may degrade.

In the present embodiment, the tensile modulus of the connecting member 14 is lower than that of the electrode units 11A, 11B. Therefore, the tensile modulus of the connecting member 14 is lower than that of the negative electrode current collector 11a. Specifically, the tensile modulus of the connecting member 14 is 90 N/mm or less.

It is noted that the material of the first and second resin tapes 14a, 14b is not particularly limited. The first and second resin tapes 14a, 14b are preferably made of, for example, polyphenylene sulfide (PPS), polypropylene (PP), or polyimide (PI). Specific examples of polyimide include a compound obtained by the dehydration and condensation of aromatic dianhydride such as pyromellitic dianhydride and aromatic diamine such as 4,4'-diaminophenyl ether. The tapes made of these resins have relatively high mechanical strength. Therefore, even when the first and second resin tapes 14a, 14b expand and contract during charging and discharging of the lithium secondary battery 1, the first and second resin tapes 14a, 14b are less broken.

The adhesive strength of the first and second resin tapes 14a, 14b to the negative electrode 11 is preferably 3 N/mm or greater. Here, the adhesive strength is a value obtained by dividing, by width (mm) of the first and second resin tapes 14a, 14b, force (N) required to peel off the first and second resin tapes 14a, 14b in the tensile test (the 180° peel test of the adhesive tape portion).

The adhesive which is applied to the surfaces of the first and second resin tapes 14a, 14b is preferably acrylic polymers, silicone polymers, or rubbers. Examples of the acrylic polymers include homopolymers or copolymers of acrylic monomers such as acrylic acid, methacrylic acid, methyl acrylate, methyl methacrylate, ethyl acrylate, ethyl methacrylate, propyl acrylate, propyl methacrylate, butyl acrylate, butyl methacrylate, octyl acrylate, octyl methacrylate, 2-ethylhexyl acrylate, 2-ethylhexyl methacrylate. Examples of the silicone polymers include a peroxide curable type silicone adhesive, an addition reaction type silicone adhesive, and the like. Examples of the peroxide curable type silicone adhesive include, for example, SH4280 manufactured by Toray Dow Coming Silicone Co., Ltd. and KR-12 manufactured by Shin-Etsu Chemical Co., Ltd. Examples of the addition reaction type silicone adhesive include, for example, SD4570 manufactured by Toray Dow Coming Silicone Co., Ltd. and X-40-3004A manufactured by Shin-Etsu Chemical Co., Ltd. Examples of the rubbers include natural rubbers, synthetic rubbers, and the like. Examples of the synthetic rubbers include a butyl rubber, a butadiene rubber, a styrene-butadiene rubber, an isoprene rubber, a neoprene rubber, a polyisobutylene rubber, an acrylonitrilebutadiene rubber, a styrene-isoprene block copolymer rubber, a styrene-butadiene block copolymer rubber, a styrene-ethylene-butadiene block copolymer rubber, and the like.

The adhesive may contain a crosslinking agent, a plasticizer, and a tackifier.

An adhesive layer preferably has a thickness of about 5 µm to 100 µm. If the thickness of the adhesive layer is too small, enough adhesive strength may not be obtained. If the thickness of the adhesive layer is too large, the proportion of the adhesive layer which is not involved in charging and discharging significantly increases in the lithium secondary battery 1, and thus the capacity of the lithium secondary battery 1 may degrade.

### (Positive electrode 12)

As shown in Figs. 5 and 6, unlike the negative electrode 11, the positive electrode 12 is integrally formed. The positive electrode 12 has a positive electrode current collector 12a, positive electrode active material layers 12b, 12c which are formed on at least one surface of the positive electrode current collector 12a. Specifically, in the present embodiment, the positive electrode active material layers 12b, 12c are provided on the both surfaces of the positive electrode current collector 12a, respectively.

In the present embodiment, in the electrode assembly 10, the positive electrode active material layers 12b, 12c are not provided on the portion of the negative electrode active material layers 11b, 11c of the negative electrode 11 on which the connecting member 14 is arranged, and on the portion of the positive electrode current collector 12a which is radically opposed to said portion. Such configuration can prevent metallic lithium from being deposited during charging and discharging of the lithium secondary battery 1.

The positive electrode current collector 12a may be made of, for example, a metal such as Al (aluminum) or an alloy containing a metal such as Al (aluminum).

The positive electrode active material layers 12b, 12c contain a positive electrode active material. A specific example of the positive electrode active material includes a lithium-cobalt compound oxide such as lithium cobaltate (LiCoO₂)

Particularly, the positive electrode active material is preferably a lithium-transition metal composite oxide represented by the chemical formula, LiₐNi_{(1-b-c)}CO_{b}Al_{c}O₂, where 0<a≤1.1, 0.1≤b≤0.3, and 0.03≤c≤0.1.

The positive electrode active material layers 12b, 12c may contain a binder, a conductive agent, or the like, in addition to the positive electrode active material, as appropriate.

As described above, since the positive electrode 12 is integrally formed, one positive electrode current collector tab 16 is electrically connected to the end portion of the positive electrode 12.

It is preferable that the positive electrode current collector tab 16 stably exists so as not to present the lithium occlusion/release reaction during charging and discharging of the lithium secondary battery 1 and not to present the dissolution reaction into the non-aqueous electrolyte. The positive electrode current collector tab 16 can be made of, for example, aluminum or tantalum. Particularly, the material of the positive electrode current collector tab 16 is preferably aluminum.

The shape of the positive electrode current collector tab 16 is not particularly limited, but the positive electrode current collector tab 16 preferably has a plate shape. In this case, the positive electrode current collector tab 16 preferably has a thickness of about 30 µm to 150 µm. The positive electrode current collector tab 16 preferably has a width of about 3 mm to 10 mm. If the positive electrode current collector 16 has too small thickness or width, the electric resistance of the junction between the positive electrode current collector tab 16 and the positive electrode 12 increases, and thus the function of the positive electrode current collector tab 16 may degrade. In contrast, if the positive electrode current collector tab 16 has too large thickness or width, the proportion of the positive electrode current collector tab 16, which is not involved in charging and discharging, substantially increases in the lithium secondary battery 1, and thus the capacity of the lithium secondary battery 1 may degrade.

Examples of a preferred method for attaching the positive electrode current collector tab 16 to the positive electrode 12 include an ultrasonic welding method, a calking method, and the like.

### (Separator 13)

A separator 13 may be composed of, for example, a known separator. Specifically, the separator 13 can be composed of, for example, a resin porous membrane. Examples of the resin porous membrane include a polyethylene microporous membrane, a polypropylene microporous membrane, and the like.

### (Non-aqueous electrolyte)

A non-aqueous electrolyte is impregnated in the electrode assembly 10. As the non-aqueous electrolyte, a known non-aqueous electrolyte can be used, for example. Specifically, the electrolyte, which was prepared by dissolving lithium hexafluorophosphate (LiPF₆) in a solvent of such as fluoroethylene carbonate (FEC) of cyclic carbonates or methyl ethyl carbonate (MEC) of chain carbonates, can be used as the non-aqueous electrolyte.

### (Battery case)

In the present embodiment, the electrode assembly 10 is cylindrically shaped, as shown in Fig. 1. The electrode assembly 10 is put in a closed-bottom cylindrical battery case 17. The material of the battery case 17 is not particularly limited. The battery case 17 may be made of, for example, metal or alloy.

The opening of the battery case 17 is sealed by a sealing lid 18. Specifically, the sealing lid 18 is fixed to the opening of the battery case 17 by crimping it with an insulative packing 20. The sealing lid 18 is connected to the positive electrode current collector tab 16 and constitutes a positive electrode terminal. On the other hand, the negative electrode current collector tabs 15a, 15b are connected to the battery case 17, and thus the battery case 17 constitutes a negative electrode terminal.

It is noted that insulating plates 19a, 19b are placed on the upper and lower surfaces of the electrode assembly 10, respectively. Such insulating plates 19a, 19b insulate the electrode assembly 10 from the battery case 17.

As described above, in the present embodiment, the negative electrode 11 is divided into the plurality of electrode units 11A, 11B. With this configuration, a space is formed between the adjacent electrode units 11A, 11B. Therefore, the electrode assembly 10 has high deformability. Hence, even when the negative electrode active material occludes lithium to expand negative electrode, the pressure within the lithium secondary battery 1 is effectively eased.

In mode detail, in the present embodiment, even when the negative electrode 11 expands, the electrode units 11 A, 11B can expand in the winding direction. This effectively prevents great pressure from being applied to the negative electrode 11, the positive electrode 12, and the separator 13 interposed between the negative and positive electrodes 11, 12. Therefore, the lithium secondary battery 1 having good charge-discharge cycle performance can be achieved.

For example, instead of dividing the negative electrode 11 into the plurality of electrode units 11A, 11B, the positive electrode 12 may be divided into the plurality of electrode units. However, the aforementioned effect of easing pressure is greater in the case where the negative electrode 11 that is to expand is divided into the plurality of electrode units. Therefore, when only one of the negative electrode 11 and the positive electrode 12 is divided into the plurality of electrode units, it is preferable that the negative electrode 11 is divided into the plurality of electrode units.

Moreover, the current collector 11a having higher tensile modulus than the positive electrode 12 is often used in the negative electrode 11 that is to expand by the lithium occlusion of the negative electrode active material. Also from this point, it is preferable that the negative electrode 11 is divided into the plurality of electrode units 11A, 11B.

Now, the lithium-transition metal composite oxide represented by the chemical formula, LiₐNi_{(1-b-c)}CO_{b}Al_{c}O₂ (where 0<a≤1.1, 0.1≤b≤0.3, and 0.03≤c≤0.1) contains Ni at a high composition ratio, and has a high mass-energy density. Thus, by using the lithium-transition metal composite oxide containing Ni at a high composition ratio as a positive electrode active material, the energy density of the lithium secondary battery may be further increased. However, the slurry containing the lithium-transition metal composite oxide containing Ni at a high composition ratio does not have preferable rolling property, and requires great pressure in the rolling. As applying great pressure in the rolling, the density of the positive electrode active material layers 12b, 12c becomes too high in the superficial layer. Thus, an electrolyte solution is less likely to pass on the superficial layer. For this reason, when the lithium-transition metal composite oxide containing Ni at a high composition ratio is used as a positive electrode active material, the electrolyte solution retention, such as a liquid retention property or a liquid supplying property, of the positive electrode active material layers 12b, 12c tend to worse. Therefore, in the lithium secondary battery having the conventional configurations, when the lithium-transition metal composite oxide containing Ni at a high composition ratio is used as a positive electrode active material, the excellent charge-discharge performance is not always obtained.

In contrast, in the present embodiment, since the negative electrode 11 is divided into the plurality of electrode units 11A, 11B, the electrode assembly 10 easily deforms. Therefore, the lithium secondary battery of the present embodiment exhibits excellent supplying of lithium ions to the positive electrode active material layers 12b, 12c. In other words, lithium ions are easily supplied into the positive electrode active material layers 12b, 12c. Therefore, even when the lithium-transition metal composite oxide represented by the chemical formula, LiₐNi_{(1-b-c)}CO_{b}Al_{c}O₂ (where 0<a≤1.1, 0.1≤ b≤0.3, and 0.03≤c≤0.1) is used as a positive electrode active material, the excellent supplying property of lithium ions to the positive electrode 12 is maintained. For the foregoing reasons, by using the lithium-transition metal composite oxide represented by the chemical formula, LiₐNi_{(1-b-c)}CO_{b}Al_{c}O₂ (where 0<a≤1.1, 0.1≤b≤0.3, and 0.03≤c≤0.1) as a positive electrode active material in the lithium secondary battery 1 of the present embodiment, the lithium secondary battery having higher energy density and more excellent charge-discharge performance can be obtained.

In the present embodiment, the battery case 17 is cylindrically shaped. For this reason, the battery case 17 is less deformable than, for example, flat-shaped battery cases, and the pressure within the battery case 17 easily increases. Therefore, the technique of reducing the pressure applied to the separator 13 which is described in the present embodiment is especially effective for the lithium secondary battery 1 having the cylindrical battery case 17, as in the present embodiment.

Moreover, when the battery case 17 is cylindrically shaped, the electrode assembly 10 is also wound into a cylindrical shape. With this configuration, when the negative electrode 11 expands, the electrode units 11A, 11B easily move in the winding direction. Therefore, the effect of suppressing the pressure applied to the separator 13 as described above is more strongly exerted.

It is noted that the effect of suppressing the pressure applied to the separator 13 may be obtained even when the electrode units 11 A, 11B are not connected via the connecting member 14, unlike in the present embodiment. However, when the electrode units 11A, 11B are not connected via the connecting member 14, the electrode assembly 10 is difficult to be wound up. For example, the electrode assembly 10 may be wound up with the electrode units 11A, 11B come in contact with each other.

In contrast, when the electrode units 11A, 11B are connected to each other via the connecting member 14 as in the present embodiment, the electrode assembly 10 can be easily wound up with the electrode units 11A, 11B maintained not to be in contact with each other.

Moreover, even when the negative electrode 11 repeatedly expands and contracts during charging and discharging of the lithium secondary battery 1, the offset of relative position between the electrode units 11A, 11B can be effectively suppressed.

It is noted that the present embodiment has been described in the case where the electrode units 11A, 11B are connected to each other via the insulative connecting member 14. However, the present invention is not limited to this configuration. The electrode units may be connected to each other via a conductive connecting member. In that case, it is not always necessary to join the current collector tab to each of the electrode units. Thus, the number of the current collector tabs can be reduced.

When the connecting member 14 is provided as in the present embodiment, the tensile modulus of the connecting member 14 is preferably lower than the tensile modulus of the electrode units 11A, 11B. This is because the connecting member 14 is less likely to prevent the electrode units 11A, 11B from deforming in the winding direction. Therefore, the tensile modulus of the connecting member 14 is preferably lower. Specifically, the tensile modulus of the connecting member 14 is preferably 90 N/mm or less. However, if the tensile modulus of the connecting member 14 is too low, it becomes difficult to keep the space between the adjacent electrode units 11A, 11B as appropriate in the winding process of the electrode assembly 10. For this reason, the tensile modulus of the connecting member 14 is preferably 10 N/mm or greater.

The connecting member 14 having such preferred tensile modulus can be made of resin, for example. However, the present invention may employ the connecting member made of materials other than resin.

Now, for example, it is considered that the negative electrode current collector tabs 15a, 15b are arranged such that the end to which the negative electrode current collector tab 15a of the electrode unit 11A is connected and the end to which the negative electrode current collector tab 15b of the electrode unit 11B is connected are adjacent to each other in the winding direction. However, in this case, the negative electrode current collector tabs 15a, 15b prevent both of the end to which the negative electrode current collector tab 15a of the electrode unit 11A is connected and the end to which the negative electrode current collector tab 15b of the electrode unit 11B is connected from deforming in the winding direction. With this configuration, the electrode units 11A, 11B are less expandable in the winding direction. Therefore, the effect of easing stress as described above cannot be easily obtained.

In contrast, in the present embodiment, the electrode units 11A, 11B are arranged such that the end to which the negative electrode current collector tab 15a of the electrode unit 11 A is connected and the end to which the negative electrode current collector tab 15b of the electrode unit 11B is connected are not adjacent to each other in the winding direction, as shown in Fig. 3. With this configuration, the negative electrode current collector tabs 15a, 15b are less likely to prevent both ends from deforming. Therefore, the pressure applied to the separator 13 and other components can be effectively reduced. Hence, higher charge-discharge cycle performance can be achieved.

Other examples and variations of the preferred embodiment of the present invention will be set forth below. It is noted that the components having the substantially similar functions to in the first embodiment are indicated by the similar reference numerals and will not be described in the following description. Moreover, Fig. 1 will be commonly referred to in the first through fourth embodiments.

### <Second Embodiment>

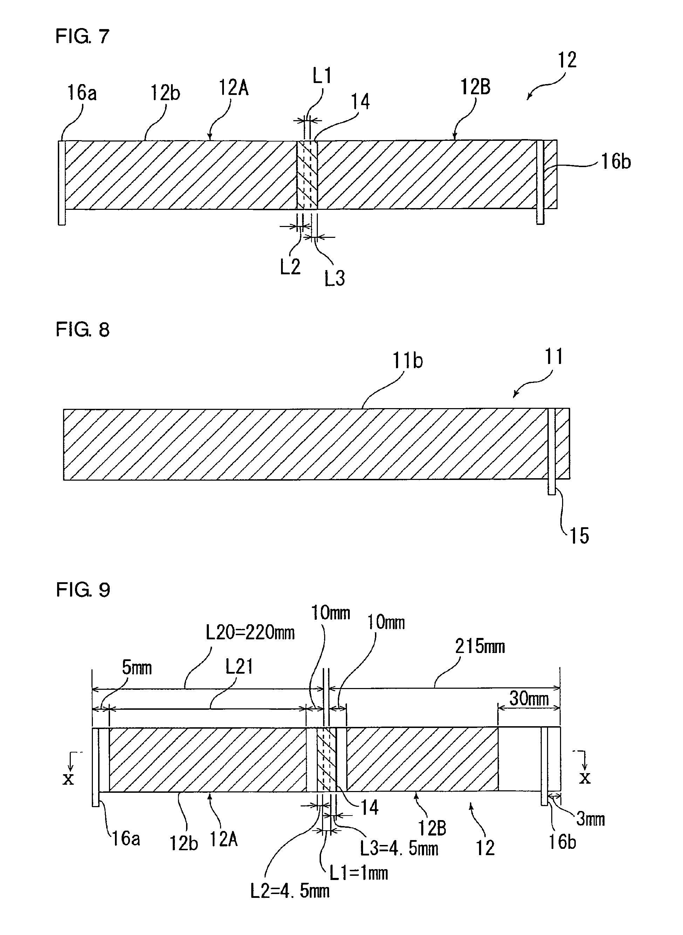

Fig. 7 is a schematic plan view of the developed positive electrode in a second embodiment. Fig. 8 is a schematic plan view of the developed negative electrode in the second embodiment;

In the above first embodiment, there has been described the case where the negative electrode 11 is divided into the plurality of electrode units while the positive electrode 12 may be integrally formed. However, the present invention is not limited to this configuration. For example, the positive electrode 12 may be divided into the plurality of electrode units while the negative electrode 11 may be integrally formed.

In the present embodiment, the positive electrode 12 comprises first and second positive electrode units 12A, 12B which are arranged in the winding direction, as shown in Fig. 7. The first and second positive electrode units 12A, 12B have the positive electrode current collector 12a and the positive electrode current material layers 12b, 12c which are described in the first embodiment, respectively.

The first and second positive electrode units 12A, 12B are connected to each other via the connecting member 14. The connecting member 14 is substantially the same as the connecting member 14 in the first embodiment. Thus, the description of the connecting member 14 in the first embodiment will be also applied hereto.

In the present embodiment, since the first and second positive electrode units 12A, 12B are connected to each other via the insulative connecting member 14, the positive electrode current collector tabs 16a, 16b are electrically connected to the first and second positive electrode units 12A, 12B, respectively. It is noted that the positive electrode current collector tabs 16a, 16b have substantially the same configuration as the positive electrode current collector tab 16 in the first embodiment. Therefore, the description of the positive electrode current collector tab 16 in the first embodiment will be also applied hereto.

As shown in Fig. 8, the negative electrode 11 is integrally formed, unlike in the first embodiment. Therefore, one negative electrode current collector tab 15 is electrically connected to the negative electrode 11. It is noted that the negative electrode current collector tab 15 has substantially the same configuration as the negative electrode current collector tabs 15a, 15b in the first embodiment. Therefore, the description of the negative electrode current collector tabs 15a, 15b in the first embodiment will be also applied hereto.

When the positive electrode 12 is divided into the plurality of electrode units 12A, 12B and the negative electrode 11 is integrally formed as in the present embodiment, the positive electrode 12 which is divided into the plurality of electrode units 12A, 12B is less likely to prevent the negative electrode from expanding. In addition, the pressure applied to the separator 13 which is interposed between the positive electrode 12 and the negative electrode 11 is reduced, as compared with the case where the positive electrode 12 is integrally formed and is less deformable in the radial direction. As a consequence, the separator 13 is less likely to cause the clogging due to the crushing of the separator 13. Hence, the lithium secondary battery 1 having good charge-discharge cycle performance can be achieved.

### <First Variation>

In the above second embodiment, there has been described the case where the electrode units 12A, 12B are connected to each other via the connecting member 14. However, the present invention is not limited to this configuration. For example, the electrode units 12A, 12B may not be connected to each other via the connecting member.

### <Second Variation>

In the above first embodiment, there has been described the example where the only negative electrode 11 of the negative and positive electrodes 11, 12 is divided into the plurality of electrode units 11A, 11B. In contrast, in the above second embodiment, there has been described the example where only positive electrode 12 of the negative and positive electrodes 11, 12 is divided into the plurality of electrode units 12A, 12B. However, the present invention is not limited to this configuration. For example, each of the negative and positive electrodes 11, 12 may be divided into the plurality of electrode units. In this case, when the negative electrode active material occludes lithium, the electrode units 11A, 11B constituting the negative electrode 11 can expand in the winding direction and the expansion of the negative electrode 11 is less likely to be blocked by the positive electrode 12. With this configuration, the pressure applied to the separator 13 can be further reduced. Therefore, the separator 13 is less likely to cause the clogging due to the crushing of the separator 13. Hence, the lithium secondary battery 1 having good charge-discharge cycle performance can be achieved.

### <Third Embodiment>

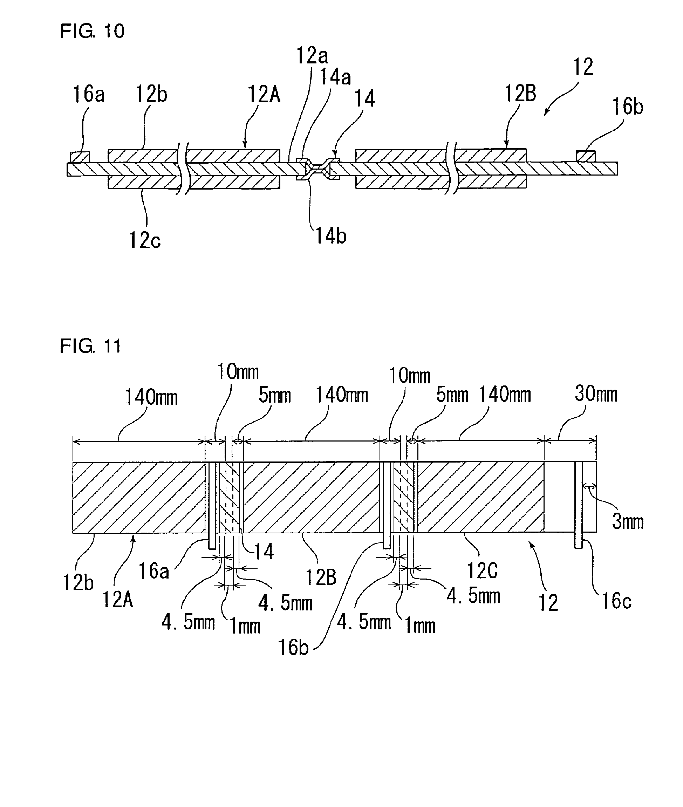

Fig. 9 is a schematic plan view of the developed positive electrode in a third embodiment. Fig. 10 is a schematic cross-sectional view taken along line X-X in Fig. 9.

In the above second embodiment, there has been described the example where the positive electrode active material layers 12b, 12c are formed on substantially all the surfaces of the positive electrode current collector 12a in each of the electrode units 12A, 12B. However, the present invention is not limited to this configuration.

For example, as shown in Figs. 9 and 10, the positive electrode active material layers 12b, 12c may be formed on only a part of the positive electrode current collector 12a. In the present variation, the positive electrode active material layers 12b, 12c are not be provided on the connected portion by the connecting member 14. The connecting member 14 is adhered or bonded to the positive electrode current collector 12a. Therefore, the peeling off of the positive electrode active material layers 12b, 12c can be prevented when any stress is applied to the connecting member 14.

It is noted that if the portion on which the positive electrode active material layers 12b, 12c are provided is too small, the capacity of the lithium secondary battery 1 may degrade. For this reason, the length L21 (see Fig. 9) of the portion on which the positive electrode active material layers 12b, 12c are provided is preferably 0.005-0.5 times longer than the length L20 of the positive electrode current collector 12a.

Similarly, for the negative electrode 11, the negative electrode active material layers 11b, 11c may be formed on only a part of the negative electrode current collector 11 a. For example, the negative electrode active material layers 11b, 11c may not be provided on the connected portion by the connecting member 14. In this case, the connecting member 14 is adhered or bonded to the negative electrode current collector 11 a. Therefore, the peeling off of the negative electrode active material layers 11b, 11c can be prevented when any stress is applied to the connecting member 14.

It is noted that in the present embodiment, the positive electrode 12 is integrally formed.

### <Fourth Embodiment>

Fig. 11 is a schematic plan view of the developed positive electrode in a fourth embodiment.

In the above third embodiment, there has been described the case where the positive electrode 12 is divided into the plurality of electrode units 12A, 12B. However, the present invention is not limited to this configuration. The positive electrode 12 may be divided into, for example, three or more electrode units.

For example, in the example shown in Fig. 11, the positive electrode 12 is divided into three electrode units 12A to 12C. The connecting members 14 are provided between the electrode units 12A and 12B, and between the electrode units 12B and 12C. Then, the positive electrode current collector tabs 16a to 16c are electrically connected to the three electrode units 12A to 12C, respectively. It is noted that in the present embodiment, the negative electrode 11 is integrally formed.

As in the present embodiment, when the positive electrode 12 is divided into three or more electrode units, the pressure applied to the separator 13 and other components can be more effectively reduced. However, if the positive electrode 12 is divided into a large number of electrode units, the volume of the portion which is not involved in charging and discharging increases and thus the volume percent of the active material is reduced, in the lithium secondary battery 1. Therefore, the capacity of the lithium secondary battery 1 tends to degrade. For this reason, the positive electrode 12 is preferably divided into four or less electrode units, and is more preferably divided into three or less electrode units.

The above is applied to the negative electrode 11 as well. The negative electrode 11 is preferably divided into four or less electrode units, and is more preferably divided into three or less electrode units.

### <Fifth Embodiment>

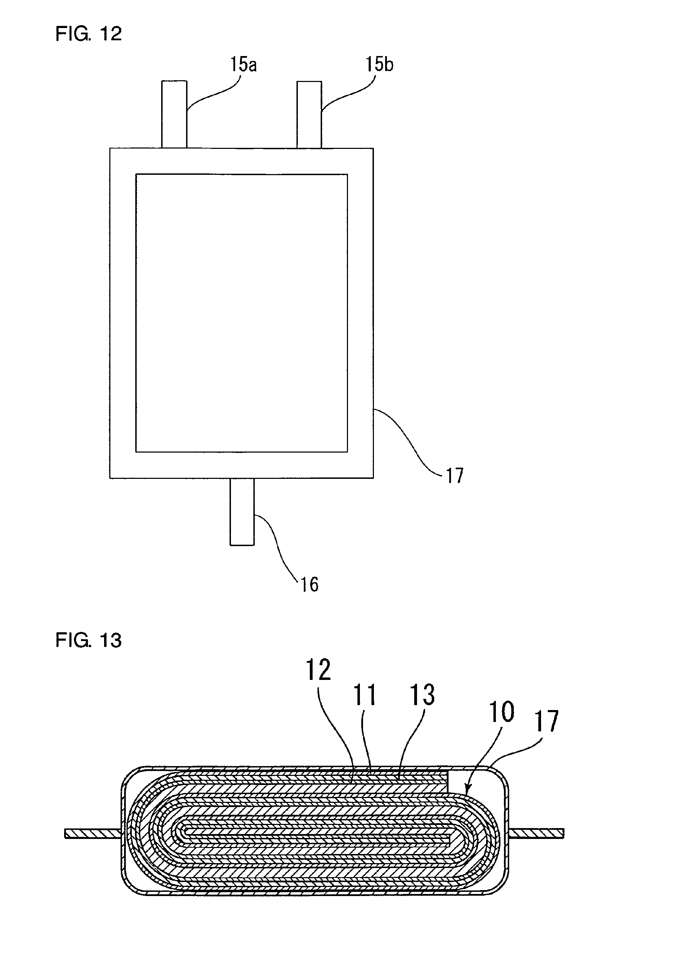

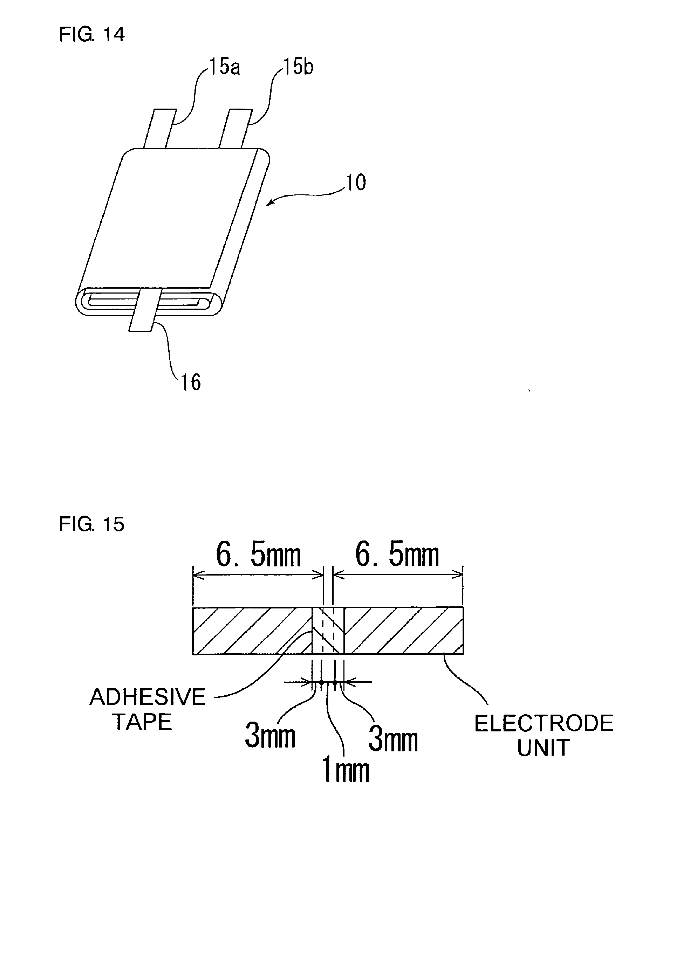

Fig. 12 is a schematic plan view of the lithium secondary battery according to a fifth embodiment. Fig. 13 is a schematic cross-sectional view of the lithium secondary battery according to the fifth embodiment. Fig. 14 is a schematic perspective view of the electrode assembly in the fifth embodiment.

In the above first to fourth embodiments, there has been described the example where the battery case 17 is cylindrical. However, the present invention is not limited to this configuration. The battery case 17 may be flat-shaped as shown in Figs. 12 to 14.

Hereafter, the present invention will be described in more detail. However, the present invention is not limited to the following examples, and may be practiced with suitable modifications made thereto so long as such modifications do not deviate from the scope of the invention.

### <Example 1 >

In the present example, a lithium secondary battery A1 having the similar configuration to the lithium secondary battery 1 according to the above first embodiment was fabricated in the following manner.

### [Preparation of Negative Electrode]

### (1) Preparation of Negative Electrode Active Material

First, polycrystalline silicon fine particle was introduced into a fluidized bed having an internal temperature of 800°C and monosilane (SiH₄) was sent thereinto to prepare granular polycrystalline silicon.

Next, the granular polycrystalline silicon was pulverized using a jet mill, and then was classified by a classifier to prepare polycrystalline silicon powder (negative electrode active material) having a median diameter of 10 µm. The median diameter was obtained at an accumulated volume of d50% in the particle size distribution measurement by a laser light diffraction method. It is noted that the polycrystalline silicon powder had a crystallite size of 44 nm. Here, the crystallite size was calculated from the half-width of silicon (111) peak measured by a powder X-ray diffraction analysis, using Scherrer's formula.

### (2) Preparation of Negative Electrode Binder Precursor

3,3',4,4'-benzophenonetetracarboxylic acid diethyl ester represented by the following chemical formula (1), (2), or (3) and m-phenylenediamine represented by the following chemical formula (4) were dissolved in N-methyl-2-pyrrolidone (NMP) so that the mole ratio (compound represented by the chemical formula (1) + compound represented by the chemical formula (2) + compound represented by the chemical formula (3)) : (compound represented by the chemical formula (4)) became 50:50, to obtain a negative electrode binder precursor solution al.

It is noted that 3,3',4,4'-benzophenonetetracarboxylic acid diethyl ester represented by the following chemical formula (1), (2), or (3) was produced by reaction of 2 equivalents of ethanol with 3,3',4,4'-benzophenonetetracarboxylic acid dianhydride represented by the following chemical formula (5).

The negative electrode binder precursor solution al was prepared by a polymerization reaction and an imidization reaction during heat treatment which set forth below to form polyimide having the monomer structure represented by the following chemical formula (6).

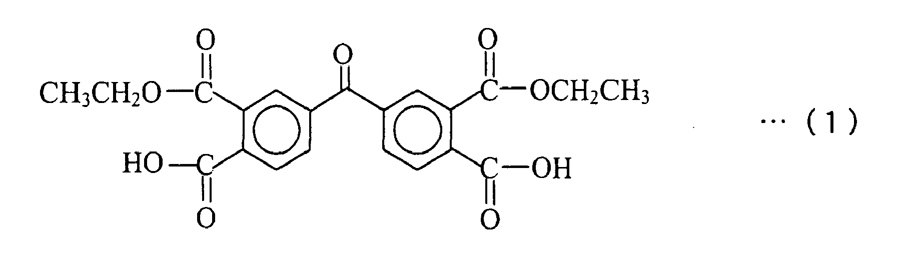

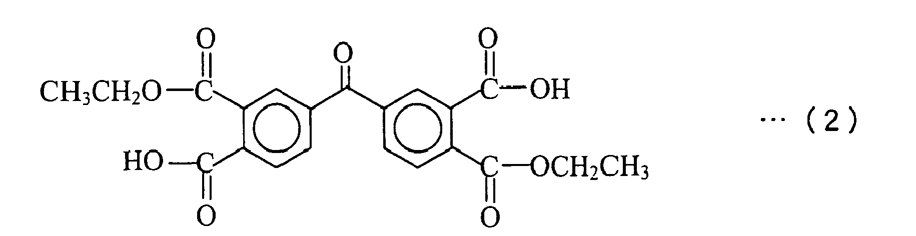

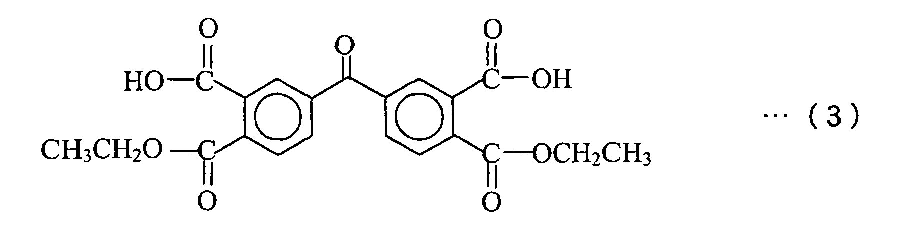

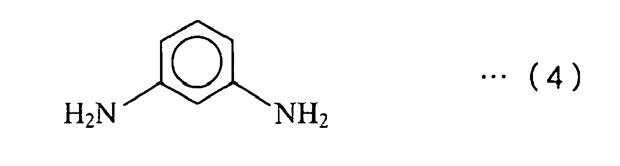

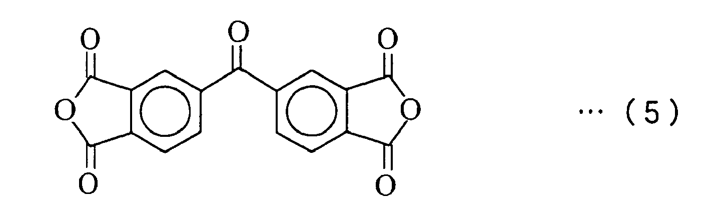

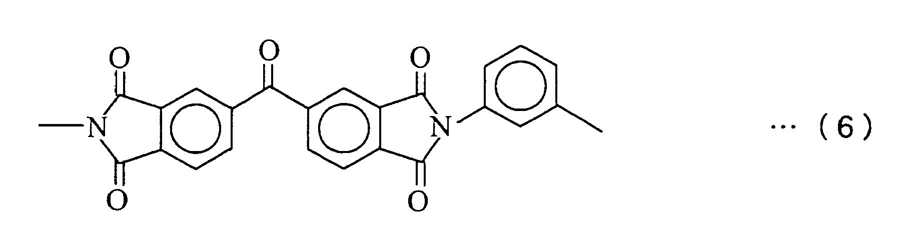

### (3) Preparation of Negative Electrode Mixture Slurry

The above-prepared negative electrode active material, graphite powder having an average particle size of 3 µm as a negative electrode conductive agent, and the just-described negative electrode binder precursor solution a1 were added to N-methyl-2-pyrrolidone (NMP) as a dispersion medium so that the weight ratio of the negative electrode active material powder, the negative electrode conductive agent powder, and the negative electrode binder (which was obtained by removing NMP from the negative electrode binder precursor solution a1 by drying and carrying out the polymerization reaction and the imidization reaction for the resultant) became 89.5:3.7:6.8. Thereafter, the mixture was kneaded to prepare a negative electrode mixture slurry.

### (4) Preparation of Member for Preparing the Negative Electrode Unit

The just-described negative electrode mixture slurry was applied onto both sides of the negative electrode current collector in the air at 25°C. Thereafter, the resultant material was dried in the air at 120°C and pressure-rolled in the air at 25°C. Then, the resultant article was cut out into a rectangle shape with a length of 499 mm and a width of 35.7 mm, and thereafter was sintered at 420°C for 10 hours under an argon atmosphere, to thus prepare a member for preparing the negative electrode unit. It is noted that in the preparation of the member for preparing the electrode unit, there has been used a negative electrode current collector made of a 18 µm-thick copper alloy foil (C7025 alloy foil, containing 96.2 wt% of Cu, 3.0 wt% of Ni, 0.65 wt% of Si, and 0.15 wt% of Mg) that had been roughed on both sides so as to have a surface roughness Ra (defined by Japanese Industrial Standard (JIS) B 0601-1994) of 0.25 µm and a mean spacing of local peaks S (also defined by JIS B 0601-1994) of 0.85 µm. The amount of the negative electrode mixture layer on the negative electrode current collector was 5.6 mg/cm², and the thickness of the negative electrode mixture layer was 56 µm.

### (5) Preparation of Adhesive Tape

Onto one side of a film material made of polyimide (PI) having a thickness of 30 µm which was obtained by the dehydration and condensation of pyromellitic dianhydride and 4,4'-diaminophenyl ether, a peroxide-curing type silicone adhesive, SH4280 manufactured by Toray Dow Corning Silicone Co., Ltd. was applied. Thereafter, the resultant material was dried at 100°C for five minutes, and then was heat-treated at 180°C for five minutes to form a silicone adhesive layer having a thickness of 25 µm. Next, the resultant article was cut out into a shape with a width of 10 mm and a length of 36 mm to thus prepare an adhesive tape A.

### (6) Preparation of Negative Electrode

The just-described member for preparing negative electrode unit was cut out to prepare a rectangular negative electrode unit having a length of 239 mm and a width of 35.7 mm and a rectangular negative electrode unit having a length of 260 mm and a width of 35.7 mm. The adhesive tape A was adhered to both sides of the portion having a length of 4.5 mm and a width of 35.7 mm of adjacent end portions of both negative electrode units with the negative electrode units spaced at 1 mm, to prepare a negative electrode. Then, negative electrode current collector composed of a nickel plate having a thickness of 70 µm, a width of 3 mm, and a length of 45 mm was joined to the end portions of each negative electrode unit.

### [Preparation of Positive Electrode]

### (1) Preparation of Lithium-transition Metal Composite Oxide as Positive Electrode Active Material

Li₂CO₃ and CoCO₃ were weighted so that the mole ratio of Li and Co became 1:1 and were mixed in a mortar. Thereafter, the mixture was sintered in an air atmosphere at 800°C for 24 hours and then pulverized to obtain powder of a lithium-cobalt composite oxide represented as LiCoO₂ The powder of a lithium-cobalt composite oxide had an average particle size of 11 µm. The resultant powder of positive electrode active material had a BET specific surface area of 0.37 m²/g_{.}

### (2) Preparation of Positive Electrode

The just-described LiCoO₂ powder as a positive electrode active material, carbon material powder as a positive electrode conductive agent, and polyvinylidene fluoride as a positive electrode binder were added to N-methyl-2-pyrrolidone as a dispersion medium so that the weight ratio of the positive electrode active material, the positive electrode conductive agent, and the positive electrode binder became 95:2.5:2.5. Thereafter, the mixture was kneaded to prepare a positive electrode mixture slurry.

The just-described positive electrode mixture slurry was applied onto both sides of the positive electrode current collector. Thereafter, the resultant material was dried in the air at 110°C and pressure-rolled. The amount of the positive electrode active material layer on the positive electrode current collector was 48 mg/cm² in the portion where the active material layers were formed on both sides. The positive electrode had a thickness of 143 µm. As a positive electrode current collector, an aluminum (1085) foil having 15 µm thickness, 485 mm length, and 33.7 mm width was used.

Next, a positive electrode current collector tub composed of an aluminum plate having 70 µm thickness, 3 mm width, and 45 mm length was connected to the end portion of the positive electrode.

### [Preparation of Non-aqueous Electrolyte Solution]

Lithium hexafluorophosphate (LiPF₆) was dissolved at a concentration of 1.0 mole/L in a mixed solvent of 2:8 volume ratio of fluoroethylene carbonate (FEC) and methyl ethyl carbonate (MEC) under an argon atmosphere. Thereafter, 0.4 wt% of carbon dioxide gas was dissolved therein, to thus prepare a non-aqueous electrolyte solution.

### [Preparation of Electrode Assembly]

A sheet of positive electrode, a sheet of negative electrode, and two sheets of separators were wound around a winding core having a diameter of 4 mm with the positive and negative electrodes disposed facing each other via the separator interposed therebetween. Then, the winding core was removed to thus prepare an electrode assembly. The electrode assembly after removing of the winding core had a cylindrical shape having a diameter of 12.8 mm and a height of 37.7 mm. The separator used was a porous polyethylene film having a thickness of 20 µm, a length of 550 mm, a width of 37.7 mm, a penetration resistance of 350 g, and a porosity of 40%.

### [Fabrication of Battery]

The aforementioned cylindrical electrode assembly and the non-aqueous electrolyte solution were inserted into a cylindrical battery case made of SUS in a CO₂ atmosphere at 25°C and 1 atm to fabricate Battery A1 according to Example 1. Battery A1 had a diameter of 14 mm and a height of 43 mm.

### Example 2

In the example, Battery A2 was fabricated in the same manner as in Example 1, except that a different connecting member (adhesive tape B) was used and each length was set at L1=1 mm and L2=L3=7.5 mm.

### (Preparation of Adhesive Tape B)

The resultant material obtained by mixing a butyl rubber, a petroleum resin manufactured by Maruzen Petrochemical Co., Ltd., MARUKACLEAR L, and a petroleum resin manufactured by Maruzen Petrochemical Co., Ltd., MARUKAREZ M-890A, in a weight ratio of 65:10:25, and diluting the mixture with toluene, was applied onto one side of the polyimide film material having a thickness of 30 µm which was also used in Battery A1. Thereafter, the resultant material was dried at 100°C for five minutes to form a rubber adhesive layer having a thickness of 25 µm. Then, the resultant article was cut out into a shape with a width of 16 mm and a length of 36 mm to thus prepare an adhesive tape B. In the example, a negative electrode was prepared using the adhesive tape B instead of adhesive tape A.

### Example 3

In the example, Battery A3 was fabricated in the same manner as in Example 2, except that a different connecting member (adhesive tape C) was used.

### (Preparation of Adhesive Tape C)

Butyl acrylate, acrylic acid, and benzoyl peroxide were mixed in the weight ratio of 65:10:25 and the mixture was solution copolymerized in toluene to obtain a polymer. The polymer and a polyisocyanate crosslinking agent manufactured by Nippon Polyurethane Industry Co., Ltd., Coronate L, were mixed in the weight ratio of 97:3 to prepare a solution. The resultant solution was applied onto one side of the film material having a thickness of 30 µm and made of polyphenylene sulfide (PPS). Thereafter, the resultant material was dried at 100°C for five minutes to form an acrylic adhesive layer having a thickness of 25 µm. Then, the resultant article was cut out into a shape with a width of 16 mm and a length of 36 mm to thus prepare an adhesive tape C. In the example, a negative electrode was prepared using the adhesive tape C instead of adhesive tape B.

### Example 4

In the example, Battery A4 was fabricated in the same manner as in Example 3, except that an adhesive tape D, which was the same type of tape as the aforementioned adhesive tape C but had a width of 7 mm and a length of 36 mm, was used, and each length was set at L1=1 mm and L2=L3=3 mm.

### Example 5

In the example, a lithium secondary battery A5 having the similar configuration to the lithium secondary battery according to the third embodiment was fabricated in the following manner. It is noted that Battery A5 was fabricated in substantially the same manner as in Example 1 other than the preparation of the negative and positive electrodes.

### (Preparation of Negative Electrode)

The rectangular negative electrode having the similar configuration to the negative electrode unit of Battery A1 and having a length of 500 mm and a width of 35.7 mm was used. In the example, a negative electrode current collector tab composed of a nickel plate having a thickness of 70 µm, a width of 3 mm, and a length of 45 mm was joined to the end portions of the negative electrode in the longitudinal direction.

### (Preparation of Positive Electrode)

A positive electrode unit having substantially the same configuration as the positive electrode of Battery A1 was prepared and was connected using the adhesive tape A, which was also used for preparing Battery A1, to prepare a positive electrode having the shape and dimension shown in Fig. 9.

### Example 6

In the example, Battery A6 was fabricated in the same manner as in Example 5, except that the adhesive tape B was used instead of the adhesive tape A and each length was set at L1=1 mm and L2=L3=7.5 mm.

### Example 7

In the example, Battery A7 was fabricated in the same manner as in Example 6, except that the adhesive tape C was used instead of the adhesive tape B.

### Example 8

In the example, Battery A8 was fabricated in the same manner as in Example 5, except that the adhesive tape D was used instead of the adhesive tape B and each length was set at L1=1 mm and L2=L3=3 mm.

### Example 9

In the example, Battery A9 was fabricated in the same manner as in Example 5 except that another positive electrode was used. In the example, a positive electrode shown in Fig. 11 was prepared in the following manner.

### (Preparation of Positive Electrode)

A positive electrode unit having substantially the same configuration as the positive electrode of Battery A1 was prepared and was connected using the adhesive tape A, which was also used for preparing Battery A1, to prepare a positive electrode having the shape and dimension shown in Fig. 11.

### Comparative Example 1

Battery B1 1 was fabricated in the same manner as in Example 1 except that the negative electrode similar to the negative electrode which was used with Battery A5 was used.

### <Measurement of Mechanical Property of Connecting Member>

The mechanical property of two adhesive tapes, which were used in Batteries A1 to A9 as the connecting member, was measured by a tensile test under the following conditions. The obtained stress-strain curve provides tensile strength, tensile modulus (gradient of the curved portion from the strain of zero), and elongation per width of 1 mm.

### (Conditions of Tensile Test)

. Test sample: the resultant material obtained by adhering two adhesive tapes having a width of 15 mm and a length of 140 mm via an adhesive portion
. Size of test sample: a width of 15 mm and a length of 140 mm
. Grabbed amount of sample during tension measurement: a width of 15 mm and a length of 20 mm from each of both ends
. Device: desktop load measuring device 1310N manufactured by AIKOH ENGINEERING CO., LTD.
. Tension rate: 5 mm/sec.

### <Measurement of Mechanical Property of Negative Electrode Unit (Negative Electrode)>

The mechanical property of the portion of a sheet of negative electrode unit among the aforementioned Batteries A1 to A9 and B1 (Batteries A5 to A9 and B1 are negative electrodes), on which the negative electrode active material layer is provided, was measured by a tensile test under the following conditions. The obtained stress-strain curve provides tensile strength, tensile modulus (gradient of the curved portion from the strain of zero), and elongation per width of 1 mm.

### (Conditions of Tensile Test)

. Test sample: the piece obtained by cutting out the applied portion into a rectangular shape with a width of 15 mm and a length of 140 mm
. Grabbed amount of sample during tension measurement: a width of 15 mm and a length of 20 mm from each of both ends
. Device: desktop load measuring device 1310N manufactured by AIKOH ENGINEERING CO., LTD.
. Tension rate: 5 mm/sec.

### <Measurement of Mechanical Property of Positive Electrode (Positive Electrode Unit)>

The mechanical property of the portion of a positive electrode among the aforementioned Batteries A1 to A9 and B1 (each of Batteries A5 to A9 and B1 is a sheet of positive electrode unit), on which the positive electrode active material layer are provided on both sides, was measured by a tensile test under the following conditions. The obtained stress-strain curve provides tensile strength, tensile modulus (gradient of the curved portion from the strain of zero), and elongation per width of 1 mm.

### (Conditions of Tensile Test)

. Test sample: the piece obtained by cutting out the applied portion into a rectangular shape with a width of 15 mm and a length of 140 mm
. Grabbed amount of sample during tension measurement: a width of 15 mm and a length of 20 mm from each of both ends
. Device: desktop load measuring device 1310N manufactured by AIKOH ENGINEERING CO., LTD.
. Tension rate: 5 mm/sec.

### <Measurement of Adhesive Strength of Adhesive Tape>

As shown in Fig. 15, the two electrode units were connected via the two adhesive tapes to prepare a sample. Using the sample, a tensile test was carried out under the following conditions to measure the adhesive strength of each adhesive tape. It is noted that the adhesive strength refers to a tensile force per width of 1 mm at the time of the occurrence of the peeling off of either one of two adhering portions between the electrode unit and the adhesive tape.

### (Test Conditions)

. Size of test sample: a width of 15 mm and a length of 140 mm
. Grabbed amount of sample during tension measurement: a width of 15 mm and a length of 20 mm from each of both ends
. Device: desktop load measuring device 1310N manufactured by AIKOH ENGINEERING CO., LTD.
. Tension rate: 5 mm/sec.

### <Evaluation of Charge-Discharge Cycle Performance>

The aforementioned Batteries A1 to A9 and B1 were evaluated in terms of charge-discharge cycle performance under the following charge-discharge cycle conditions.

### (Charge-Discharge Cycle Conditions)

. Charge for the First Cycle
   Each of the batteries was charged at a constant current of 45 mA for 4 hours, thereafter charged at a constant current of 180 mA until the battery voltage reached 4.2 V, and further charged at a constant voltage of 4.2 V until the current value reached 45 mA.
. Discharge for the First Cycle
   Each of the batteries was discharged at a constant current of 180 mA until the battery voltage reached 2.75 V.
. Charge for the Second Cycle Onward
   Each of the batteries was charged at a constant current of 450 mA until the battery voltage reached 4.2 V and thereafter charged at a constant voltage of 4.2 V until the current value reached 45 mA.
. Discharge for the Second Cycle Onward
   Each of the batteries was discharged at a constant current of 900 mA until the battery voltage reached 2.75 V.

In addition, the charge-discharge cycle life, which is defined as the number of cycles at which the capacity retention ratio (the value obtained by dividing the discharge capacity at the nth cycle by the discharge capacity at the first cycle) reaches 85%, was calculated.

The results of the above tests are shown in Tables 1 and 2.

**Table 1**

| Battery | Connecting Member | | | | | Negative Electrode Unit (Negative Electrode) | | | Positive Electrode Unit (Positive Electrode) | | | Connecting Portion | |
|---|---|---|---|---|---|---|---|---|---|---|---|---|---|
| | Resin Sheet | Adhesive | Tensile Strength (N/mm) | Tensile Modulus (N/mm) | Elongation (%) | Tensile Strength (N/mm) | Tensile Modulus (N/mm) | Elongation (%) | Tensile Strength (N/mm) | Tensile Modulus (N/mm) | Elongation (%) | Electrode | Adhesive Strength (N/mm) |
| Battery A1 | PI | Silicone | 7.8 | 82 | 51 | 7.3 | 1600 | 6.4 | 2.5 | 670 | 3.1 | Negative Electrode | 6.6 |
| Battery A2 | PI | Rubber | 7.6 | 94 | 53 | 7.3 | 1600 | 6.4 | 2.5 | 670 | 3.1 | Negative Electrode | 61 |
| Battery A3 | PPS | Acrylic | 5.3 | 67 | 56 | 7.3 | 1600 | 6.4 | 2.5 | 670 | 3.1 | Negative Electrode | 6 3 |
| Battery A4 | PPS | Acrylic | 5.1 | 65 | 52 | 7.3 | 1600 | 6.4 | 2.5 | 670 | 3.1 | Negative Electrode | 5.7 |
| Battery A5 | PI | Silicon | 7.8 | 82 | 51 | 7.3 | 1600 | 6.4 | 2.5 | 670 | 3.1 | Positive Electrode | *1) (≥2.5) |
| Battery A6 | P1 | Rubber | 7 6 | 94 | 53 | 7.3 | 1600 | 6.4 | 2.5 | 670 | 3.1 | Positive Electrode | *1) (≥2 5) |
| Battery A7 | PPS | Acrylic | 5 3 | 67 | 56 | 7.3 | 1600 | 6.4 | 2.5 | 670 | 3.1 | Positive Electrode | *1) (≥2.5) |
| Battery A8 | PPS | Acrylic | 5.1 | 65 | 52 | 7.3 | 1600 | 6.4 | 2.5 | 670 | 3.1 | Positive electrode | *1) (≥2.5) |
| Battery A9 | PI | Silicone | 7.8 | 82 | 51 | 7.3 | 1600 | 6.4 | 2.5 | 670 | 3.1 | Positive Electrode | *1) (≥2.5) |
| Battery B1 | Not Applied | Not Applied | ― | ― | ― | 7.3 | 1600 | 6.4 | 2.5 5 | 670 | 3.1 | Not Applied | ― |

| | | | | | | | | | | | | | |
|---|---|---|---|---|---|---|---|---|---|---|---|---|---|
| *1) The portion to which the electrode was not applied was early broken | | | | | | | | | | | | | |

**Table 2**

| Battery | Battery Shape | Electrode Unit | | | Connecting Member | | | Connecting Portion | Cycle Life |
|---|---|---|---|---|---|---|---|---|---|
| | | Electrode | Number | Tensile Modulus (N/mm) | Resin Sheet | Adhesive | Tensile Modulus (N/mm) | Adhesive Strength (N/mm) | |
| Battery A1 | Cylindrical | Negative Electrode | 2 | 1600 | PI | Silicone | 82 | 6. 6 | 131 |
| Battery A2 | Cylindrical | Negative Electrode | 2 | 1600 | PI | Rubber | 94 | 6.1 | 119 |
| Battery A3 | Cylindrical | Negative Electrode | 2 | 1600 | PPS | Acrylic | 67 | 6.3 | 137 |
| Battery A4 | Cylindrical | Negative Electrode | 2 | 1600 | PPS | Acrylic | 65 | 5.7 | 139 |
| Battery A5 | Cylindrical | Positive Electrode | 2 | 670 | PI | Silicone | 82 | *1) (≥25) | 122 |
| Battery A6 | Cylindrical | Positive Electrode | 2 | 670 | PI | Rubber | 94 | *1) (≥2 5) | 112 |
| Battery A7 | Cylindrical | Electrode | 2 | 670 | PPS | Acrylic | 67 | *1) (≥ 25) | 128 |
| Battery A8 | Cylindrical | Positive Electrode | 2 | 670 | PPS | Acrylic | 65 | *1) (≥ 2 5) | 128 |
| Battery A9 | Cylindrical | Positive Electrode | 3 | 670 | PI | Silicone | 75 | *1) (≥ 2 5) | 135 |
| Battery B1 | cylindrical | Not Applied | ― | ― | Not Applied | Not Applied | ― | ― | 102 |

| | | | | | | | | | |
|---|---|---|---|---|---|---|---|---|---|
| *1) The portion to which the electrode was not applied was early broken | | | | | | | | | |

As shown in above Tables 1 and 2, Batteries A1 to A9 of which at least one of the positive and negative electrodes is composed of the plurality of electrode units exhibited more excellent cycle life than Battery B1 of which each of positive and negative electrodes is integrally formed. From this result, it is understood that the configuration in which at least one of the positive and negative electrodes is composed of the plurality of electrode units can achieve excellent charge-discharge cycle life.

Moreover, by comparing among Batteries A1 to A4 and among Batteries A5 to A8, it is understood that the lower the tensile modulus of the connecting member is, the longer the charge-discharge cycle life becomes. Particularly, it is understood that when the tensile modulus of the connecting member is 90 N/mm or less, the longer charge-discharge cycle life can be achieved.

In addition, by comparing between Batteries A1 to A4 and Batteries A5 to A8, it is understood that the effect of improving the charge-discharge cycle life can be made more effective in the case of dividing the negative electrode into the plurality of electrode units, rather than the case of dividing the positive electrode into the plurality of electrode units.

Furthermore, by comparing between Batteries A5 and A9, it is understood that the larger the number of electrode units constituting the negative or positive electrode is, the more excellent the charge-discharge cycle life is.

Next, the inventors had examined the case where the battery case had a flat shape.

### Example 10

In the example, a lithium secondary battery C 1 having the similar configuration to the lithium secondary battery 1 according to the fifth embodiment was fabricated.

Specifically, a cylindrical electrode assembly was prepared using the positive and negative electrodes and the separator which were used in Example 1, and was pressed on to obtain a flat-shaped electrode assembly. Then, the same type of electrolyte solution as used in Example 1 and the aforementioned flat-shaped electrode assembly were inserted into an aluminum laminate battery case in a CO₂ atmosphere at 25°C and 1 atm to fabricate flat-shaped Battery C1.

### Example 11

Battery C2 was fabricated in the same manner as in Example 10 except that the positive and negative electrodes of Example 2 were used.

### Example 12

Battery C3 was fabricated in the same manner as in Example 10 except that the positive and negative electrodes of Example 3 were used.

### Example 13

Battery C4 was fabricated in the same manner as in Example 10 except that the positive and negative electrodes of Example 4 were used.

### Example 14

Battery C5 was fabricated in the same manner as in Example 10 except that the positive and negative electrodes of Example 5 were used.

### Example 15

Battery C6 was fabricated in the same manner as in Example 10 except that the positive and negative electrodes of Example 6 were used.

### Example 16

Battery C7 was fabricated in the same manner as in Example 10 except that the positive and negative electrodes of Example 7 were used.

### Example 17

Battery C8 was fabricated in the same manner as in Example 10 except that the positive and negative electrodes of Example 8 were used.

### Example 18

Battery C9 was fabricated in the same manner as in Example 10 except that the positive and negative electrodes of Example 9 were used.

### Comparative Example 2

Battery D1 was fabricated in the same manner as in Example 10 except that the positive and negative electrodes of Comparative Example 1 were used.

### <Evaluation of Charge-Discharge Cycle Performance>

The charge-discharge cycle life for each of Batteries C1 to C9 and D1 was also obtained in the same manner. The results are shown in Table 3.

**Table 3**

| Battery | Battery Shape | Electrode Unit | | | Connecting Member | | | Connecting Portion | Cycle Life |
|---|---|---|---|---|---|---|---|---|---|
| | | Electrode | Number | Tensile Modulus (N/mm) | Resin Sheet | Adhesive | Tensile Modulus (N/mm) | Adhesive Strength (N/mm) | |
| Battery C1 | Flat-Shaped | Negative Electrode | 2 | 1600 | PI | Silicone | 82 | 6. 6 | 110 |
| Battery C2 | Flat-Shaped | Negative Electrode | 2 | 1600 | PI | Rubber | 94 | 6.1 | 109 |
| Battery C3 | Flat-Shaped | Negative Electrode | 2 | 1600 | PPS | Acrylic | 67 | 6. 3 | 114 |
| Battery C4 | Flat-Shaped | Negative Electrode | 2 | 1600 | PPS | Acrylic | 65 | 5.7 | 111 |
| Battery C5 | Flat-Shaped | Positive Electrode | 2 | 670 | PI | Silicone | 82 | *1) (≥ 2 5) | 108 |
| Battery C6 | Flat-Shaped | Positive Electrode | 2 | 670 | PI | Rubber | 94 | *1) (≥25) | 107 |
| Battery C7 | Flat-Shaped | Positive Electrode | 2 | 670 | PPS | Acrylic | 67 | *1) (≥2 5) | 109 |
| Battery C8 | Flat-Shaped | Positive Electrode | 2 | 670 | PPS | Acrylic | 65 | *1) (≥25) | 109 |
| Battery C9 | Flat-Shaped | Positive Electrode | 3 | 670 | PI | Silicone | 75 | *1) (≥2 5) | 111 |
| Battery D1 | Flat-Shaped | Not Applied | ― | ― | Not Applied | Not Applied | ― | ― | 99 |

| | | | | | | | | | |
|---|---|---|---|---|---|---|---|---|---|
| *1) The portion to which the electrode was not applied was early broken. | | | | | | | | | |

The results shown in Table 3 clearly demonstrate that, even when the battery case has a flat shape, Batteries C1 to C9 each of which at least one of positive and negative electrodes was divided into the plurality of electrode units exhibited more excellent charge-discharge cycle life than Battery D1 of which both of positive and negative electrodes were integrally formed. From the results, it is understood that the aforementioned effect of improving the charge-discharge cycle performance can be obtained regardless of the shape of the battery case.

However, as apparent from the comparison between Batteries A1 to A9 and Batteries C1 to C9, it is understood that the cylindrical batteries have a greater effect of improving the charge-discharge cycle life than the flat-shaped batteries. From the results, it will be particularly advantageous to divide at least one of positive and negative electrodes into the plurality of electrode units in the lithium secondary battery using the cylindrical battery case.

Next, an experiment for considering the relationship between the kinds of the positive electrode active material and the cycle life was conducted.

### Example 19

Battery E1 was fabricated in the same manner as in Example 10 except that the positive electrode prepared under the following conditions was used.

### [Preparation of Positive Electrode]

### 1) Preparation of Lithium-transition Metal Composite Oxide

LiOH and a composite hydroxide in which nickel was principal component (Ni₀.₈₀Co_{0.17}Al₀.₀₃(OH)₂) were mixed using a mortar to provide the mole ratio of 1.05:1. Thereafter, the mixture was sintered in an air atmosphere at 720°C for 20 hours and then pulverized to obtain powder of a lithium-nickel-cobalt-aluminum composite oxide represented as Li_{1.05}Ni_{0.80}Co_{0.17}Al_{0.03}O₂ having an average particle size of 10 µm. In the example, the lithium-nickel-cobalt-aluminum composite oxide was used as the positive electrode active material. It is noted that the resultant powder of lithium-nickel-cobalt-aluminum composite oxide had a BET specific surface area of 0.39 m²/g.

### (2) Preparation of Positive Electrode

The above-prepared powder of positive electrode active material, carbon material powder as a positive electrode conductive agent, and polyvinylidene fluoride as a positive electrode binder were added to NMP as a dispersion medium so that the weight ratio of the active material, the conductive agent, and the binder became 95:2.5:2.5. Thereafter, the mixture was kneaded to prepare a positive electrode mixture slurry.

The positive electrode mixture slurry was applied to both sides of an aluminum foil having 15 µm thickness, 402 mm length, and 50 mm width as the positive electrode current collector so that the applied portion had 340 mm length and 50 mm width on the front surface and 270 mm length and 50 mm width on the back surface. Thereafter, the resultant material was dried and pressure-rolled. The amount of the active material layer on the current collector and the thickness of the positive electrode were 36.6 mg/cm² and 117 µm, respectively, in the portion on which the active material layer was formed on both sides.

Then, an aluminum plate serving as a positive electrode current collector tab was connected to an end portion of the positive electrode to which the positive electrode active material layer was not applied.

### Comparative Example 3

Battery F1 was fabricated in the same manner as in Comparative Example 2 except that the positive electrode prepared in Example 19 was used.

The charge-discharge cycle life of each of Battery E1 fabricated in Example 19 and Battery F1 fabricated in Comparative Example 3 was evaluated in the same manner as the above evaluation method. The results are shown in Table 4 in conjunction with the evaluation results for Batteries C1 and D1.

| Battery | Battery Shape | Positive Electrode | Electrode Unit | | | Connecting Member | | | Connecting Portion | Cycle Life | |
|---|---|---|---|---|---|---|---|---|---|---|---|
| | | | Electrode | Number | Tensile Modulus (N/mm) | Resin Sheet | Adhesive | Tensile Modulus (N/mm) | Adhesive Strength (N/mm) | | |
| Battery E1 | Flat-Shaped | Li_{1 05}Ni _{0 80}Co_{0 17}Al _{0 03}0₂ | Negative Electrode | 2 | 1600 | PI | Silicone | 82 | 6. 6 | 118 | +27 |
| Battery F1 | Flat-Shaped | Li_{1 05}Ni_{0 80}Co_{0 17}Al_{0 03}0₂ | Not Applied | ― | ― | Not Applied | Not Applied | ― | ― | 91 | |
| Battery C1 | Flat-Shaped | LiCo0₂ | Negative Electrode | 2 | 1600 | PI | Silicone | 82 | 6. 1 | 110 | +11 |
| Battery D1 | Flat-Shaped | LiCo0₂ | Not Applied | ― | ― | Not Applied | Not Applied | ― | ― | 99 | |

As shown in Table 4, Battery E1 of which at least one of positive and negative electrodes was divided into the plurality of electrode units had more excellent cycle life than Battery F1 of which each of positive and negative electrodes was integrally formed. From the results, it is understood that the cycle life can be increased by dividing at least one of the positive and negative electrodes into the plurality of electrode units even when the lithium-nickel-cobalt-aluminum composite oxide was used as a positive electrode active material.

As comparing Batteries D1 and F1 of which positive and negative electrodes were not divided into the plurality of electrode units, Battery D1 which did not contain Ni as a positive electrode active material had a better cycle life than Battery F1 which contained Ni as a positive electrode active material.

On the other hand, as comparing Batteries C1 and E1 of which at least one of the positive and negative electrodes was divided into the plurality of electrode units, Battery E1 which contained Ni as a positive electrode active material had a better cycle life than Battery C 1 which did not contain Ni as a positive electrode active material.

Moreover, Battery C1 of which at least one of the positive and negative electrodes was divided into the plurality of electrode units had longer cycle life by 11 cycles than Battery D1 of which each of positive and negative electrodes were integrally formed. On the other hand, Battery E1 of which at least one of the positive and negative electrodes was divided into the plurality of electrode units had longer cycle life by 27 cycles than Battery F1 of which each of positive and negative electrodes was integrally formed.

From the results, it is understood that the greater effect of improving the cycle life, which is caused by dividing at least one of the positive and negative electrodes into the plurality of electrode units, can be achieved when the lithium-nickel-cobalt-aluminum composite oxide was used as a positive electrode active material, than when lithium-cobalt composite oxide was used as a positive electrode active material.

## Claims

1. A lithium secondary battery comprising:
an electrode assembly which is made by winding a negative electrode containing a negative electrode active material that is alloyed with lithium, a positive electrode, and a separator interposed between the negative and positive electrodes; and
a non-aqueous electrolyte which is impregnated in the electrode assembly,
wherein
at least one of the negative and positive electrodes is divided into a plurality of electrode units which are arranged at spaces for each other along the winding direction.

2. The lithium secondary battery according to Claim 1, further comprising a connecting member which connects the adjacent electrode units.

3. The lithium secondary battery according to Claim 2, wherein tensile modulus of the connecting member is lower than tensile modulus of the electrode units.

4. The lithium secondary battery according to Claim 2 or 3, wherein the tensile modulus of the connecting member is 90 N/mm or less.

5. The lithium secondary battery according to any one of Claims 1 to 4, further comprising tabs which are electrically connected to each end portion of the plurality of electrode units, wherein
the plurality of electrode units are arranged such that the ends to which the tabs of the electrode units are connected are not adjacent to each other in the winding direction.

6. The lithium secondary battery according to any one of Claims 2 to 5, wherein the connecting member has a first tape which is adhered or bonded to one surface of the electrode unit, and a second tape which is adhered or bonded to the other surface of the electrode unit.

7. The lithium secondary battery according to any one of Claims 2 to 6, wherein the connecting member is made of resin.

8. The lithium secondary battery according to any one of Claims 1 to 7, wherein the negative electrode is divided into the plurality of electrode units.

9. The lithium secondary battery according to Claim 8, wherein each of the negative and positive electrodes is divided into the plurality of electrode units.

10. The lithium secondary battery according to any one of Claims 1 to 9, further comprising a cylindrical battery case into which the electrode assembly is put.

11. The lithium secondary battery according to any one of Claims 1 to 10, wherein the number of the electrode units in the electrode which is divided into the plurality of electrode units, of the negative and positive electrodes, is four or less.

12. The lithium secondary battery according to any one of Claims 1 to 11, wherein the negative electrode active material is at least one of silicon and silicon alloy.

13. The lithium secondary battery according to any one of Claims 1 to 12, wherein the positive electrode contains a lithium-transition metal composite oxide represented by the chemical formula, LiₐNi(1-b-c)Co_{b}Al_{c}O₂, where 0<a≤1.1, 0.1≤b≤0.3, and 0.03≤c≤0.1, as a positive electrode active material.
